# EUROPÄISCHE PATENTSCHRIFT

(11) **EP 1 701 987 B1**
(45) Veröffentlichungstag und Bekanntmachung des Hinweises auf die Patenterteilung: **09.05.2012**
(21) Anmeldenummer: 04803524.0
(22) Anmeldetag: 04.12.2004
(51) Int. Cl.: C08G 18/38, C08G 18/48, C08F 4/04, C08G 18/75

(54) **VERFAHREN ZUR HERSTELLUNG VON BLOCKPOLYMERISATEN IN MINIEMULSION**
METHOD FOR PRODUCING MINIEMULSION BLOCK POLYMERS
PROCEDE DE PRODUCTION DE COPOLYMERES SEQUENCES EN MINIEMULSION

(30) Priorität: 08.12.2003 DE 10357533
(43) Veröffentlichungstag der Anmeldung: 20.09.2006
(73) Patentinhaber: BASF SE, 67056 Ludwigshafen (DE); Max-Planck-Gesellschaft zur Förderung der Wissenschaften e.V., 80539 München (DE)
(72) Erfinder: LICHT, Ulrike, 68309 Mannheim (DE); ANTONIETTI, Markus, 14558 Bergholz-Rehbrücke (DE); LANDFESTER, Katharina, 89075 Ulm (DE)
(86) Internationale Anmeldenummer: PCT/EP2004/013812
(87) Internationale Veröffentlichungsnummer: WO 2005/054323

(56) Entgegenhaltungen:
- EP-A- 0 522 675
- WO-A-02/064657
- WO-A-03/083004
- DE-A1- 10 018 601
- DE-A1- 10 241 294
- DE-A1- 19 852 784

## Beschreibung

Die Erfindung betrifft eine wässrige Dispersion eines Blockcopolymeren aus einem Polyaddukt oder Polykondensat (kurz Polymer I) einerseits und einem durch radikalische Polymerisation erhältlichen Polymeren (kurz Polymer II) andererseits, dadurch gekennzeichnet, dass
- Polymer I durch Umsetzung seiner Ausgangsverbindungen in Miniemulsion erhältlich ist,
- eine der Ausgangsverbindungen von Polymer I ein Initiator für die radikalische Polymerisation ist und
- die Herstellung des Polymeren II in Gegenwart dieses Initiators erfolgt.

Weiterhin betrifft die Erfindung ein Verfahren zur Herstellung der Blockcopolymerisate und die Verwendung der Blockcopolymerisate.

Polyurethane werden üblicherweise durch Umsetzung ihrer Ausgangsverbindungen (Isocyanate und mit Isocyanaten reaktive Verbindungen) in einem organischen Lösemittel hergestellt. Durch Dispergierung des erhaltenen Polyurthans in Wasser erhält man eine sogenannte Sekundärdispersion.

Polyurethandispersionen können auch direkt durch Umsetzung der Ausgangsverbindungen in wässriger Phase erhalten werden (Primärdispersionen).

Dies ist möglich durch das in WO 02/064657 beschriebene Verfahren der Polymerisation in Miniemulsion.

Bei diesem Verfahren werden die Ausgangsverbindungen in Wasser in Gegenwart geringer Mengen einer hydrophoben Verbindung mit einer Wasserlöslichkeit kleiner 10⁻⁷ g/l Wasser (bei 21 °C) emulgiert.

Die Größe der Tröpfchen wird durch bekannte Verfahren auf 50 bis 500 nm eingestellt. Durch die Gegenwart der hydrophoben Substanz tritt der Effekt der Ostwaldreifung (Anwachsen der Tröpfchen bis zur Phasentrennung) nicht auf.

In den Tröpfchen können vielmehr die Ausgangsverbindungen bei mehr oder weniger gleich bleibender Tröpfchengröße zu Polyurethanen umgesetzt werden. Auf diese Weise werden Polyurethan-primärdispersionen erhalten.

In entsprechender Weise können auch Mischpolymerisate aus Polyurethan und einem durch radikalische Polymerisation erhältlichen Polymer in Miniemulsion hergestellt werden. Nach DE-A-10241294 (PF 53898) werden dazu zum Gemisch der Ausgangsverbindungen des Polyurethans und der radikalisch polymerisierbaren Monomere übliche Initiatoren für die radikalische Polymerisation zugesetzt.

Gewünscht sind definierte Blockcopolymerisate mit hohem Molekulargewicht, damit eine gute Filmbildung und gute anwendungstechnische Eigenschaften erreicht werden. Gewünscht ist insbesondere eine hohe Transparenz der gebildeten Filme und ein Eigenschaftsniveau der mechanischen Eigenschaften, z.B. der Zugfestigkeit und Elastizität der Filme, welche den Eigenschaften des reinen Polyurethans möglichst entsprechen.

Die Verwendung von Azoinitiatoren, welche an Polyurethan gebunden sind zur Herstellung von Blockcopolymerisaten ist z.B. in EP-A-522675 oder DE-A-4123223 beschrieben.

Aufgabe der vorliegenden Erfindung war demgegenüber, eine wässrige Dispersion von Copolymerisaten mit den vorstehend genannten Eigenschaften. Aufgabe war auch ein einfaches Verfahren zu ihrer Herstellung.

Demgemäß wurde die eingangs definierte wässrige Dispersion gefunden.

Bei den Dispersionen der vorliegenden Anmeldung handelt es sich um Primärdispersionen, die durch Umsetzung der Ausgangsverbindungen des Blockcopolymerisats in wässriger Phase in Miniemulsion erhältlich sind, wie in der DE-A-10241294 beschrieben ist.

Die Ausgangsverbindungen werden dazu in Wasser mit Hilfe von oberflächenaktiven Verbindungen, z.B. Emulgatoren oder Schutzkolloide, emulgiert.

Wesentlich ist die Mitverwendung von hydrophoben Verbindungen als Costabilisatoren.

Diese Costabilisatoren haben eine Wasserlöslichkeit von vorzugsweise kleiner 10⁻⁵, besonders bevorzugt kleiner 10⁻⁶, ganz besonders bevorzugt kleiner 10⁻⁷ g/Liter Wasser bei 21°C, 1 bar.

Die Menge der Costabilisatoren kann z.B. 0,1 bis 10 Gew.-Teile, insbesondere 1 bis 3 Gew.-Teile auf 100 Gew.-Teile Ausgangsverbindungen betragen.

Als Costabilisatoren in Betracht kommen z.B. Kohlenwasserstoffe wie Hexadecan, halogenierte Kohlenwasserstoffe, Silane, Siloxane, hydrophobe Öle (Olivenöl) oder auch

Ausgangsverbindungen für das Polyurethan, soweit sie die notwendige Hydrophobie haben.

Die Teilchengröße der emulgierten Tröpfchen der Ausgangsverbindungen beträgt vorzugsweise 50 bis 500 nm.

Die Teilchengröße kann durch bekannte Methoden wie Homogenisierung in Hochdruckhomogenisatoren oder Anwendung von Ultraschall eingestellt werden.

Die erhaltene Dispersion hat wie die Emulsion der Ausgangsverbindungen eine Tröpfchengröße von vorzugsweise 50 bis 500 nm, besonders bevorzugt 100 bis 300 nm.

Das in der wässrigen Phase dispergierte Blockcopolymerisat besteht aus einem Polyaddukt oder Polykondensat, kurz Polymer I, und einem durch radikalische Polymerisation erhältlichen Polymer (kurz Polymer II).

Bei dem Polyaddukt oder Polykondensat kann es sich z.B. um einen Polyester, Polyurethan, Polyharnstoff, Polyamid, Polyamidsäure oder Expoxydharz handeln.

Vorzugsweise handelt es sich um ein Polyurethan.

Das Polyurethan ist vorzugsweise aufgebaut aus:
a) Polyisocyanaten
b) Polyolen, von denen
   b₁) 10 bis 100 mol%, bezogen auf die Gesamtmenge der Polyole (b), ein Molekulargewicht von 500 bis 5000 g/mol aufweisen,
   b₂) 0 bis 90 mol-%, bezogen auf die Gesamtmenge der Polyole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen,
d) gegebenenfalls weiteren von den Monomeren (a) bis (c) verschiedenen Verbindungen mit mindestens 2 gegenüber Isocyanat reaktiven Gruppen, von denen mindestens eine Gruppe eine primäre oder sekundäre Aminogruppe oder eine Mercaptogruppe ist,
e) gegebenenfalls von den Monomeren (a) bis (d) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

Insbesondere zu nennen sind als Monomere (a) Diisocyanate X(NCO)₂, wobei X für einen aliphatischen Kohlenwasserstoffrest mit 4 bis 15 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische.

Derartige Diisocyanate sind im Handel erhältlich.

Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 80 mol-% 2,4-Diisocyanatotoluol und 20 mol-% 2,6-Diisocyanatotoluol geeignet. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Auch Polyisocyanate mit mehr als 2 Isocyanatgruppen können mitverwendet werden. In Betracht kommen z.B. Isocyanate und Biurete z.B. des Hexamethylendiisocyanats.

Zum Aufbau der Polyurethane kann man als Verbindungen außer den vorgenannten auch Isocyanate einsetzen, die neben den freien Isocyanatgruppen weitere verkappte Isocyanatgruppen, z.B. Uretdiongruppen tragen.

Im Hinblick auf gute Filmbildung und Elastizität kommen als Polyole (b) vornehmlich höhermolekulare Polyole (b1) in Betracht, die ein Molekulargewicht von etwa 500 bis 5000, vorzugsweise von etwa 1000 bis 3000 g/mol haben. Es handelt sich hierbei um das zahlenmittlere Molgewicht Mn. Mn ergibt sich durch Bestimmung der Anzahl der Endgruppen (OH-Zahl).

Bei den Polyolen (b1) kann es sich um Polyesterpolyole handeln, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC- (CH₂)_{y}-COOH, wobei y eine Zahl von 1 bis 20, bevorzugt eine gerade Zahl von 2 bis 20 ist, z.B. Bernsteinsäure, Adipinsäure, Sebacinsäure und Dodecandicarbonsäure.

Als mehrwertige Alkohole kommen z.B. Ethylenglykol, Propan-1,2- diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methylpropan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Ferner kommen gegebenenfalls auch Polycarbonat-Diole, wie sie z.B. durch Umsetzung von Phosgen mit einem Überschuss von den als Aufbaukomponenten für die Polyesterpolyole genannten niedermolekularen Alkohole erhalten werden können, in Betracht.

Gegebenenfalls können auch Polyesterpolyole auf Lacton-Basis mitverwendet werden, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)₂-COOH ableiten, wobei z eine Zahl von 1 bis 20 ist und ein H-Atom einer Methyleneinheit auch durch einen C₁- bis C₄-Alkylrest substituiert sein kann. Beispiele sind e-Caprolacton, β-Propiolacton, g-Butyrolacton und/oder Methyl-e-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des e-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Polyetherpolyole sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gernisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 2,2-Bis(4-hydroxyphenyl)-propan oder Anilin erhältlich. Besonders bevorzugt sind Polypropylenoxid, Polytetrahydrofuran eines Molekulargewichts von 240 bis 5000, und vor allem 500 bis 4500.

Unter b₁) fallen nur Polyetherpolyole, die zu weniger als 20 Gew.% aus Ethylenoxid bestehen. Polyetherdiole mit mindestens 20 Gew.% sind hydrophile Polyetherdiole, welche zu Monomeren c) zählen.

Gegebenenfalls können auch Polyhydroxyolefine mitverwendet werden, bevorzugt solche mit 2 endständigen Hydroxylgruppen, z.B. α,-ω-Dihydroxypolybutadien, α,-ω-Dihydroxypolymethacrylester oder α,-ω-Dihydroxypolyacrylester als Monomere (c1). Solche Verbindungen sind beispielsweise aus der EP-A 0622378 bekannt. Weitere geeignete Polyole sind Polyacetale, Polysiloxane und Alkydharze.

Die Härte und der Elastizitätsmodul der Polyurethane lassen sich erhöhen, wenn als Diole (b) neben den Diolen (b1) noch niedermolekulare Diole (b2) mit einem Molekulargewicht von etwa 60 bis 500, vorzugsweise von 62 bis 200 g/mol, eingesetzt werden.

Als Monomere (b2) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer gradzahligen Anzahl von C-Atomen sowie Pentan-1,5-diol und Neopentylglykol bevorzugt werden.

Als Polyole b₂) kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methylpropan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Bevorzugt beträgt der Anteil der Polyole (b₁), bezogen auf die Gesamtmenge der Diole (b) 10 bis 100 mol-% und der Anteil der Monomere (b₂), bezogen auf die Gesamtmenge der Diole (b) 0 bis 90 mol-%. Besonders bevorzugt beträgt das Verhältnis der Diole (b1) zu den Monomeren (b2) 0,1 : 1 bis 5:1, besonders bevorzugt 0,2 : 1 bis 2 : 1.

Um die Wasserdispergierbarkeit der Polyurethane zu verbessern, können die Polyurethane von den Komponenten (a), (b) und (d) verschiedene Monomere (c), die wenigstens eine Isocyanatgruppe oder wenigstens eine gegenüber Isocyanatgruppen reaktive Gruppe und darüber hinaus wenigstens eine hydrophile Gruppe oder eine Gruppe, die sich in eine hydrophile Gruppe überführen lässt, tragen, als Aufbaukomponente enthalten.

Derartige hydrophile Monomere können zwar mitverwendet werden, sind aber für eine stabile Miniemulsion nicht erforderlich. Vorzugsweise ist der Gehalt an ionischen Gruppen kleiner 100 mmol pro 1000 g Polyurethan, besonders bevorzugt enthält das Polyurethan keine Monomeren c).

Die Monomere (d), die von den Monomeren (a) bis (c) verschieden sind und welche gegebenenfalls auch Bestandteile des Polyurethans sind, dienen im allgemeinen der Vernetzung oder der Kettenverlängerung.

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Ferner kommen Monoalkohole in Betracht, die neben der Hydroxyl-Gruppe eine weitere gegenüber Isocyanaten reaktive Gruppe tragen wie Monoalkohole mit einer oder mehreren primären und/oder sekundären Aminogruppen, z.B. Monoethanolamin. Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z.B. in Form der entsprechenden Ketimine (siehe z.B. CA-A 1 129 128), Ketazine (vgl. z.B. die US-A 4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der erfindungsgemäßen Polyurethane zur Kettenverlängerung der Prepolymeren eingesetzt werden können.

Monomere (e), die gegebenenfalls mitverwendet werden, sind Monoisocyanate, Monoalkohole und monoprimäre und -sekundäre Amine. Im allgemeinen beträgt ihr Anteil maximal 10 mol%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-a,a-dimethylbenzylisocyanat (TMI) und Ester von Acryl-oder Methacrylsäure wie Hydroxyethylacrylat oder Hydroxyethylmethacrylat.

Überzüge mit einem besonders guten Eigenschaftsprofil erhält man vor allem dann, wenn als Monomere (a) im wesentlichen nur aliphatische Diisocyanate, cycloaliphatische Diisocyanate oder araliphatische Diisocyanate eingesetzt werden.

Normalerweise werden die Komponenten (a) bis (e) sowie ihre jeweiligen Molmengen so gewählt, dass das Verhältnis A : B mit
- A der: Molmenge an Isocyanatgruppen und
- B: der Summe aus der Molmenge der Hydroxylgruppen und der Molmenge der funktionellen Gruppen, die mit Isocyanaten in einer Additionsreaktion reagieren können
0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A: B möglichst nahe an 1 : 1.

Die eingesetzten Monomere (a) bis (e) tragen im Mittel üblicherweise 1,5 bis 3, bevorzugt 1,9 bis 2,1, besonders bevorzugt 2,0 Isocyanatgruppen bzw. funktionelle Gruppen, die mit Isocyanaten in einer Additionsreaktion reagieren können.

Erfindungsgemäß handelt es sich bei einer der Ausgangsverbindungen von Polymer I um einen Initiator für die radikalische Polymerisation. Dieser Initiator wird daher durch die Umsetzung der Ausgangsverbindungen an Polymer I gebunden.

Der Initiator enthält demgemäß mindestens eine, vorzugsweise eine oder zwei, besonders bevorzugt zwei reaktive Gruppen, welche ihn zur Anbindung an Polymer I befähigen. Im Falle eines Polyurethans als Polymer I kann es sich bei den reaktiven Gruppen um Isocyanatgruppen oder mit Isocyanat reaktive Gruppen, z.B. Hydroxylgruppen, Aminogruppen oder Carboxylatgruppen handeln. Vorzugsweise handelt es sich um Isocyanatgruppen oder Hydroxylgruppen.

Der Initiator enthält mindestens eine Gruppe, welche radikalische Polymerisationen initiieren kann, z.B. eine Azo- oder Peroxogruppe.

Vorzugsweise enthält der Initiator eine initiierende Gruppe, insbesondere eine Azogruppe. Geeignete Initiatoren sind z.B. aus EP-A-522675 und DE-A-4123223 bekannt.

Geeignete Initiatoren haben ein Molekulargewicht zwischen 58 und 5000 g/Mol.

Insbesondere beträgt das Molekulargewicht 100 bis 1000 g/Mol.

Insbesondere geeignet sind folgende Initiatoren der Formel I bis IV

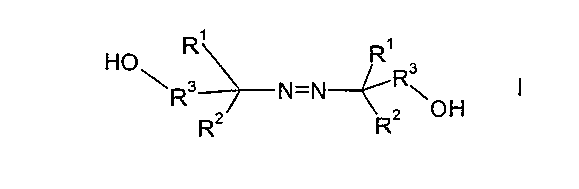

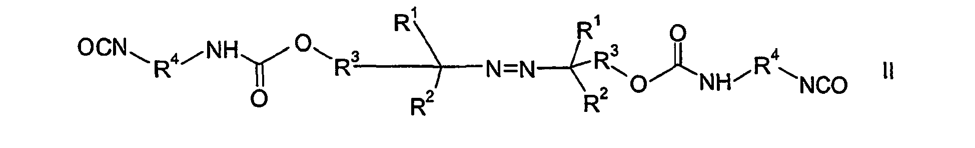

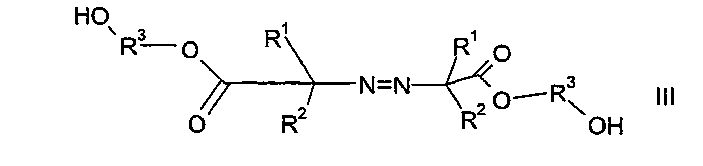

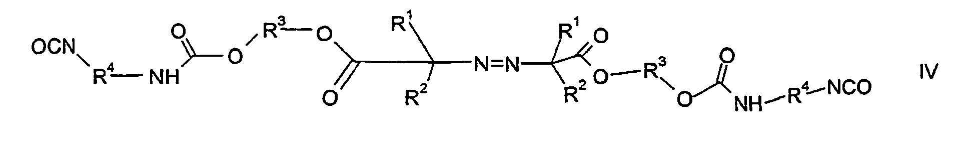

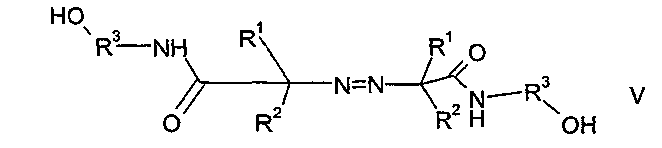

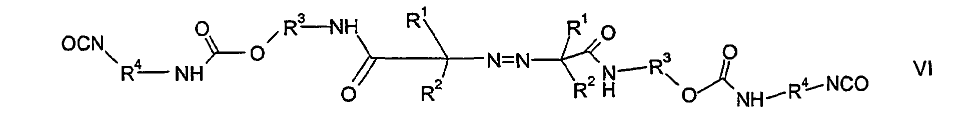

In diesen Formeln haben die Variablen folgende Bedeutung:
- R¹:: H-Atom oder C₁-C₄-Alkylgruppe, vorzugsweise H-Atom oder Methylgruppe
- R²:: CN-Gruppe oder C₁-C₄-Alkylgruppe
- R³, R⁴:: unabhängig voneinander zweiwertige organische Gruppe mit bis zu 30 C-Atomen, vorzugsweise mit 2 bis 20 C-Atomen. In Formel und II kann R³ auch eine Einfachbindung sein, d.h. R³ entfällt hier.

Bei dem Initiator kann es sich um ein Polyisocyanat (a), ein Polyol (b) oder sonstige Monomere (c) bis (e) handeln, je nach Art der reaktiven Gruppe und ihrer Anzahl.

Der Anteil der Initiatoren in Polymer I richtet sich letztlich nach der gewünschten Menge des Polymeren II im Blockcopolymerisat, da der Initiator die Herstellung des Polymeren II initiieren soll.

Vorzugsweise beträgt der Gehalt des Initiators in Polymer I 0,1 bis 100 Gew.-Teile, oder 0,1 bis 10 Gew.-Teile besonders bevorzugt 0,1 bis 5 Gew.-Teile, ganz besonders bevorzugt 0,3 bis 3 Gew.-Teile auf 100 Gew.-Teile Polymer II.

Polymer II ist durch radikalische Polymerisation von ethylenisch ungesättigten Verbindungen (Monomere) erhältlich.

Das Polymer besteht zu mindestens 40 Gew.% oder zu mindestens 60 Gew.-%, bevorzugt zu mindestens 80 Gew.%, besonders bevorzugt zu mindestens 90 Gew.-% aus sogenannten Hauptmonomeren.

Die Hauptmonomeren sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Zu nennen sind z.B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol, a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.
Als Vinylether zu nennen sind z.B. Vinylmethylether oder Vinylisobutylether. Bevorzugt wird Vinylether von 1 bis 4 C-Atome enthaltenden Alkoholen.

Als Kohlenwasserstoffe mit 4 bis 8 C-Atomen und zwei olefinischen Doppelbindungen seien Butadien, Isopren und Chloropren genannt.

Als Hauptmonomere bevorzugt sind die C₁- bis C₁₀-Alkylacrylate und -methacrylate, insbesondere C₁- bis C₈-Alkylacrylate und -methacrylate und Vinylaromaten, insbesondere Styrol und deren Mischungen.

Ganz besonders bevorzugt sind Methylacrylat, Methylmethacrylat, Ethylacrylat, n-Butylacrylat, n-Hexylacrylat, Octylacrylat und 2-Etyhlhexylacrylat, Styrol sowie Mischungen dieser Monomere.

Neben den Hauptmonomeren kann das Polymer weitere Monomere enthalten, z.B. Monomere mit Carbonsäure, Sulfonsäure oder Phosphonsäuregruppen. Bevorzugt sind Carbonsäuregruppen. Genannt seien z.B. Acrylsäure, Methacrylsäure, Itaconsäure, Maleinsäure oder Fumarsäure.

Weitere Monomere sind z.B. auch Hydroxylgruppen enthaltende Monomere, insbesondere C₁-C₁₀-Hydroxyalkyl(meth)acrylate, (Meth)acrylamid.

Als weitere Monomere seien darüberhinaus Phenyloxyethylglykolmono- (meth-)acrylat, Glycidylacrylat, Glycidylmethacrylat, Amino- (meth-)acrylate wie 2-Aminoethyl-(meth)acrylat genannt.

Als weitere Monomere seien auch vernetzende Monomere genannt.

Insbesondere ist das Polymer zu mindestens 60 Gew.-%, besonders bevorzugt zu mindestens 80 Gew.% und ganz besonders bevorzugt zu mindestens 95 Gew.% aus C₁ bis C₂₀ Alkyl(meth)acrylaten aufgebaut.

Der Anteil von Polymer I am Blockcopolymerisat beträgt vorzugsweise 5 bis 95 Gew.-%, besonders bevorzugt 20 bis 80 Gew.%. Der Anteil des Polymeren II beträgt entsprechend 5 bis 95 Gew.-%, besonders bevorzugt 20 bis 80 Gew.-%, bezogen auf das Blockcopolymerisat (entspricht Gewichtssumme von Polymer I und II).

Ganz besonders bevorzugt beträgt der Anteil von Polymer I und II jeweils 40 bis 60 Gew.%.

Die Herstellung der Dispersion des Blockcopolymeren erfolgt vorzugsweise durch Polymerisation in Miniemulsion. Dieses Verfahren wurde bereits eingangs beschrieben.

Es kann so verfahren werden, dass zunächst die Ausgangsverbindungen von Polymer I zu Polymer I umgesetzt werden und anschließend die Umsetzung der Ausgangsverbindungen des Polymer II in Gegenwart von Polymer I erfolgt.

Die Polyaddition der Komponenten (a) bis (e) zur Herstellung des Polyurethans erfolgt vorzugsweise bei Reaktionstemperaturen von bis zu 180°C bei Normaldruck oder unter Druck, bevorzugt bis zu 100°C unter Normaldruck.

Die radikalische Polymerisation der Ausgangsverbindungen zu Polymer II erfolgt ebenfalls vorzugsweise bei Temperaturen bis zu 130°C bei Normaldruck oder unter Druck, insbesondere bei Temperaturen bis zu 100°C unter Normaldruck.

In einer bevorzugten Ausführungsform wird eine Miniemulsion aus allen Ausgangsverbindungen der Polymere I und II gebildet und die Umsetzung aller Ausgangsverbindungen zum Blockcopolymerisat in einem Verfahrensschritt durchgeführt.

Das erhaltene Blockcopolymerisat hat ein hohes Molgewicht und eine einheitliche Block-Struktur. Vorteilhafte anwendungstechnische Eigenschaften sind insbesondere eine hohe Transparenz und gute mechanische Eigenschaften der erhaltenen Filme.

Insbesondere können aus den Dispersionen schon bei tiefen Temperaturen, z.B. bei Temperaturen kleiner 50°C, insbesondere bei Raumtemperatur (21 °C) bei Normaldruck, Filme gebildet werden.

Die Dispersionen haben gute anwendungstechnische Eigenschaften, insbesondere eine gute Haftung auf üblichen Substanzen aus Metall, Kunststoff oder Holz.

Die Dispersionen eignen sich gut als Bindemittel für Klebstoffe, Dichtungsmassen, Beschichtungsmittel, Lederzurichtung oder Papierbeschichtungen.

Die Dispersionen eignen sich auch gut als Bindemittel für kosmetische Zubereitungen, z.B. Haarspray, Styling-Gel, Nagellack, Make up oder Shampoo.

Sie können insbesondere auch als Dispergiermittel für organische oder anorganische Feststoffe oder als Phasenvermittler, insbesondere in Polymerblends eingesetzt werden.

### Beispiel 1:

6,1 g pTHF 1000 wurden mit 0,4 g Azoinitiator VA085 der Firma WAKO (2,2'-Azobis(N-butanol-2-yl)-2-methylpropionamid), 4 g Styrol, 0,2 g Hexadecan und 1,63 g IPDI gemischt und mit einer Lösung von 2,17 g Steinapol NLS in 27,9 g VE-Wasser schnell verrührt. Dann wurde unter Kühlung mit einem Eisbad 2 min mit einem Branson Sonifier W 450 bei 100% Amplitude und 50% Puls beschallt. Danach wurden 2 Tropfen DBTL zugegeben und 5 h auf 60°C erhitzt. Dann wurde die Temperatur 5 h auf 72°C erhöht, dann nochmals 5 h auf 95°C. Es war kein Styrolgeruch mehr festzustellen. Nach Filtration über 40my wurde der Feststoffgehalt zu 29,2 % bestimmt. Teilchengröße :150 nm

### Beispiel 2:

6,2 g pTHF 1000 wurden mit 0,358g Azoinitiator VA086 der Firma WAKO (2,2'-Azobis(2-methyl-N-(2-hydroxyethyl)propionamid), 4,1 g Styrol , 0,2 g Hexadecan und 1,65 g IPDI gemischt und mit einer Lösung von 2,19g Steinapol NLS in 28,1 g VE-Wasser schnell verrührt. Dann wurde unter Kühlung mit einem Eisbad 2 min mit einem Branson Sonifier W 450 bei 100% Amplitude und 50% Puls beschallt. Danach wurden 2 Tropfen DBTL zugegeben und 5 h auf 60°C erhitzt. Dann wurde die Temperatur 5 h auf 72°C erhöht, dann nochmals 5 h auf 95°C. Es war kein Styrolgeruch mehr festzustellen. Nach Filtration über 40my wurde der Feststoffgehalt zu 27,6 % bestimmt. Teilchengröße : 148 nm.

## Patentansprüche

1. Wässrige Dispersion eines Blockcopolymeren aus einem Polyaddukt oder Polykondensat (kurz Polymer I) einerseits und einem durch radikalische Polymerisation erhältlichen Polymeren (kurz Polymer II) andererseits, **dadurch gekennzeichnet, dass**
- Polymer I durch Umsetzung seiner Ausgangsverbindungen in Miniemulsion erhältlich ist,
- eine der Ausgangsverbindungen von Polymer I ein Initiator für die radikalische Polymerisation ist und
- die Herstellung des Polymeren II in Gegenwart dieses Initiators erfolgt.

2. Wässrige Dispersion gemäß Anspruch 1, **dadurch gekennzeichnet, dass** es sich bei Polymer I um ein Polyurethan und bei den entsprechenden Ausgangsverbindungen um Isocyanate und mit Isocyanat reaktiven Verbindungen handelt.

3. Wässrige Dispersion nach Anspruch 2, **dadurch gekennzeichnet, dass** es sich bei dem Initiator um Azoverbindungen mit mindestens einer Isocyanatgruppe oder einer mit gegenüber Isocyanat reaktiven Gruppe handelt.

4. Wässrige Dispersion gemäß einem der Ansprüche 1 bis 3, **dadurch gekennzeichnet, dass** die Menge des Inititors als Ausgangsverbindung für Polymer I 0,1 bis 10 Gew.-Teile auf 100 Gew.-Teile Polymer II beträgt.

5. Wässrige Dispersion gemäß einem der Ansprüche 1 bis 4, **dadurch gekennzeichnet, dass** die Menge von Polymer I 5 bis 95 Gew. %, bezogen auf das Blockcopolymerisat beträgt.

6. Wässrige Dispersion gemäß einem der Ansprüche 1 bis 5, **dadurch gekennzeichnet, dass** es sich bei Polymer I um ein Polyurethan handelt und das Polyurethan als Bestandteil des Blockcopoymerisats aufgebaut ist aus
a) Polyisocyanaten
b) Polyolen, von denen
b₁) 10 bis 100 mol%, bezogen auf die Gesamtmenge der Polyole (b), ein Molekulargewicht von 500 bis 5000 g/mol aufweisen,
b₂) 0 bis 90 mol%, bezogen auf die Gesamtmenge der Polyole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen,
d) gegebenenfalls weiteren von den Monomeren (a) bis (c) verschiedenen Verbindungen mit mindestens 2 gegenüber Isocyanat reaktiven Gruppen, von denen mindestens eine Gruppe eine primäre oder sekundäre Aminogruppe oder eine Mercaptogruppe ist,
e) gegebenenfalls von den Monomeren (a) bis (d) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

7. Wässrige Dispersion gemäß einem der Ansprüche 1 bis 6, **dadurch gekennzeichnet, dass** Polymer II zu mindestens 40 Gew. % aus sogenannten Hauptmonomeren, ausgewählt aus C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren aufgebaut ist.

8. Verfahren zur Herstellung einer wässrigen Dispersion eines Blockcopolymeren aus einem Polyaddukt oder Polykondensat (kurz Polymer I) einerseits und einem durch radikalische Polymerisation erhältlichen Polymeren (kurz Polymer II) andererseits, **dadurch gekennzeichnet, dass**
- Polymer I durch Umsetzung seiner Ausgangsverbindungen in Miniemulsion erhalten wird,
- eine der Ausgangsverbindungen von Polymer I ein Initiator für die radikalische Polymerisation ist und
- die Herstellung des Polymeren II in Gegenwart dieses Initiators erfolgt.

9. Verfahren gemäß Anspruch 8, **dadurch gekennzeichnet, dass** eine Miniemulsion aus den Ausgangsverbindungen von Polymer I und den Monomeren von Polymer II gebildet wird und die Umsetzung der Ausgangsverbindungen und Monomeren zum Blockcopolymeren in Miniemulsion erfolgt.

10. Verfahren gemäß einem der Ansprüche 8 oder 9, **dadurch gekennzeichnet, dass** die Miniemulsion eine Monomertröpfchengröße von 50 bis 500 nm hat.

11. Verwendung der wässrigen Dispersion gemäß einem der Ansprüche 1 bis 7 in Beschichtungsmitteln, Klebstoffen, Imprägnierungsmitteln oder Dichtungsmassen.

## Claims

1. An aqueous dispersion of a block copolymer comprising a polyadduct or polycondensate (polymer For short) on one hand and a polymer obtainable by free-radical addition polymerization (polymer II for short) on the other, wherein
- polymer I is obtainable by reaction of its starting compounds in miniemulsion,
- one of the starting compounds of (polymer I is an initiator of free-radical addition polymerization, and
- polymer II is prepared in the presence of said initiator.

2. The aqueous dispersion according to claim 1, wherein (polymer I is a polyurethane and the corresponding starting compounds are isocyanates and isocyanate-reactive compounds.

3. The aqueous dispersion according to claim 2, wherein the initiator comprises azo compounds containing at least one isocyanate group or one isocyanate-reactive group.

4. The aqueous dispersion according to one of claims 1 to 3, wherein the amount of the initiator as compounds for polymer I is from 0.1 to 10 parts by weight per 100 parts by weight of polymer II.

5. Aqueous dispersion according to one of claims 1 to 4, wherein the amount of polymer I is from 5 to 95% by weight, based on the block copolymer.

6. The aqueous dispersion according to one of claims 1 to 5, wherein polymer I is a polyurethane and the polyurethane as part of the block copolymer has been synthesized from
a) polyisocyanates,
b) polyols of which
b₁₎ 10 to 100 mol%, based on the total amount of the polyols (b), have a molecular weight of from 500 to 5000 g/mol,
b₂₎ 0 to 90 mol%, based on the total amount of the polyols (b), have a molecular weight of from 60 to 500 g/mol,
c) monomers other than the monomers (a) and (b), having at least one isocyanate group or at least one group which is reactive toward isocyanate groups, and further carrying at least one hydrophilic group or one potentially hydrophilic group,
d) optionally further compounds, other than the monomers (a) to (c), having at least 2 isocyanate-reactive groups, of which at least one group is a primary or secondary amino group or a mercapto group,
e) optionally, monovalent compounds, other than the monomers (a) to (d), having a reactive group which is an alcoholic hydroxyl group, a primary or secondary amino group or an isocyanate group.

7. The aqueous dispersion according to one of claims 1 to 6, wherein polymer II has been synthesized from at least 40% by weight of principal monomers selected from C1 to C20 alkyl (meth)acrylates, vinyl esters of carboxylic acids containing up to 20 carbon atoms, vinyl aromatics having up to 20 carbon atoms, ethylenically unsaturated nitriles, vinyl halides, vinyl ethers of alcohols containing 1 to 10 carbon atoms, aliphatic hydrocarbons having 2 to 8 carbon atoms and one or two double bonds or mixtures of these monomers.

8. A process for preparing an aqueous dispersion of a block copolymer comprising a polyadduct or polycondensate (polymer I for short) on the one hand and a polymer obtainable by free-radical addition polymerization (polymer II for short) on the other, wherein
- polymer I is obtainable by reaction of its starting compounds in miniemulsion,
- one of the starting compounds of polymer I is an initiator of free-radical addition polymerization, and
- polymer II is prepared in the presence of said initiator.

9. The process according to claim 8, wherein a miniemulsion is formed from the starting compounds of polymer I and the monomers of polymer II and the reaction of the starting compounds and monomers to form the block copolymer takes place in miniemulsion.

10. The process according to one of claims 8 or 9, wherein the miniemulsion has a monomer droplet size of from 50 to 500 nm.

11. The use of the aqueous dispersion according to one of claims 1 to 7 in coating compositions, adhesives, impregnating compositions or sealants.

## Revendications

1. Dispersion aqueuse d'un copolymère séquencé constitue d'une part d'un polyadduit ou polycondensat (en abrégé polymère I) et d'autre part d'un polymère pouvant être obtenu par polymérisation radicalaire (en abrégé polymère II), **caractérisée en ce que**
- le polymère I peut être obtenu par mise en réaction de ses composés de départ dans une mini-émulsion,
- un des composés de départ du polymère I est un initiateur pour la polymérisation radicalaire, et de
- la fabrication du polymère II a lieu en présence de cet initiateur.

2. Dispersion aqueuse selon la revendication 1, **caractérisée en ce que** le polymère I est un polyuréthane et les composés de départ correspondants sont des isocyanates et des composés réactifs avec les isocyanates.

3. Dispersion aqueuse selon la revendication 2, **caractérisée en ce que** l'initiateur correspond à des composés azo contenant au moins un groupe isocyanate ou un groupe réactif avec les isocyanates.

4. Dispersion aqueuse selon l'une quelconque des revendications 1 à 3, **caractérisée en ce que** la quantité de l'initiateur en tant que composé de départ pour le polymère I est de 0,1 à 10 parties en poids pour 100 parties en poids de polymère II.

5. Dispersion aqueuse selon l'une quelconque des revendications 1 à 4, **caractérisée en ce que** la quantité du polymère I est de 5 à 95 % en poids, par rapport au copolymère séquence.

6. Dispersion aqueuse selon l'une quelconque des revendications 1 à 5, **caractérisée en ce que** le polymère I est un polyuréthane et le polyuréthane en tant que constituant du copolymère séquencé est formé à partir de
a) des polyisocyanates,
b) des polyols, parmi lesquels
b₁) 10 à 100 % en molles, par rapport à la quantité totale de polyols (b), présentent un poids moléculaire de 500 à 5 000 g/mol,
b₂) 0 à 90 % en moles, par rapport à la quantité totale de polyols (b), présentant un poids moléculaire de 60 à 500 g/mol,
c) des monomères différents des monomères (a) et (b) contenant au moins un groupe isocyanate ou au moins un groupe réactif avec les groupes isocyanate, qui portent également au moins un groupe hydrophile ou un groupe potentiellement hydrophile,
d) éventuellement d'autres composés différents des monomères (a) à (c) contenant au moins 2 groupes réactifs avec les isocyanates, parmi lesquels au moins un groupe est un groupe amino primaire ou secondaire ou un groupe mercapto,
e) éventuellement des composés monovalents différents des monomères (a) à (d) contenant un groupe réactif qui est un groupe hydroxyle alcoolique, un groupe amino primaire ou secondaire ou un groupe isocyanate.

7. Dispersion aqueuse selon l'une quelconque des revendication 1 à 6, **caractérisée en ce que** le polymère II est formé d'au moins 40 % en poids de monomères dits principaux, choisis parmi les
(méth)acrylates d'alkyle en C1 à C20, les esters de vinyle d'acides carboxylique contenant jusqu'à 20 atomes C, les composés aromatiques de vinyle contenant jusqu'à 20 atomes C, les nitriles éthyléniquement insaturées, les halogénures de vinyle, les éthers de vinyle d'alcools contentant de 1 à 10 atomes C, les hydrocarbures aliphatiques contentant 2 à 8 atomes C et une ou deux doubles liaisons, ou les mélanges de ces monomères.

8. Procédé de fabrication d'une dispersion aqueuse d'un copolymère constitué d'une part d'un ρolyadduit ou d'un polycondensat (en abrégé polymère I) et d'autre part d'un polymère pouvant être obtenu par polymérisation radicalaire (en abrégé polymère II), **caractérisé en ce que**
- le polymère I est obtenu par mise en réaction de ses composés de départ dans une mini-émulsion,
- un des composés de départ du polymère I est un initiateur pour la polymérisation radicalaire, et
- la fabrication du polymère II a lieu en présence de cet initiateur.

9. Procédé selon la revendication 8, **caractérisé en ce qu'**une mini-émulsion des composés de départ du polymère I et des monomères du polymère II est formée, et la réaction des composés de départ et des monomères pour former le copolymère séquence a lieu dans la mini-émulsion.

10. Procédé selon l'une quelconque des revendications 8 ou 9, **caractérisé en ce que** la mini-émulsion a une taille de goutte de monomères de 50 à 500 nm.

11. Utilisation de la dispersion aqueuse selon l'une quelconque des revendication 1 à 7 dans des agents de revêtement, des adhésifs, des agents d'imprégnation ou des matériaux d'étanchéité.
